# DEMANDE DE BREVET EUROPEEN

(11) **EP 0 849 479 A1**
(43) Date de publication de la demande: **24.06.1998**
(21) Numéro de dépôt: 97400304.8
(22) Date de dépôt: 11.02.1997
(51) Int. Cl.: F16B 37/04

(54) **Dispositif d'ancrage facile à poser pour un caillebotis**

(30) Priorité: 17.12.1996 FR 9615506
(71) Demandeur: Aco Produits Polymères, 27940 Notre Dame de L'Isle (FR)
(72) Inventeur: Bertet, Jean-Jacques, 27120 Pacy sur Eure (FR); Laporte, Philippe, 27620 Gasny (FR); Miquel, Joseph, 27950 Saint Pierre d'Autils (FR)
(74) Mandataire: Rousset, Jean-Claude

(57) **Abrégé**

Le dispositif comprend une pièce d'appui cylindrique (10) en matière plastique traversée par un boulon de serrage (15) de façon à s'appuyer sur les parois inclinées (7) de l'intervalle (5) entre deux barreaux voisins (2-1, 2-2) d'un caillebotis (1), la tête (18) du boulon appliquant l'objet (17) à fixer sur la face supérieure (4) du caillebotis.

Selon l'invention, la pièce d'appui peut se monter de façon pivotante sur un outil de mise en place (20) qui permet de l'introduire par le haut à travers la zone supérieure la plus étroite de l'intervalle (5).

Application à la fixation de cloisons ou barrières dans les bâtiments d'élevage.

## Description

L'invention concerne un dispositif pour fixer un objet sur une première face sensiblement plane d'un support comportant des barreaux - ou des nervures - parallèles séparés les uns des autres par des intervalles, chaque intervalle étant délimité par deux portions de parois définies respectivement par deux barreaux voisins et inclinées par rapport au plan de la première face, sur une fraction au moins de l'épaisseur des barreaux, de façon à s'éloigner l'une de l'autre à partir de cette même face, le dispositif comprenant un élément d'appui propre à s'appuyer par des zones d'appui respectives sur lesdites portions de parois inclinées et des moyens de serrage propres à solliciter l'un vers l'autre ledit objet et ledit élément d'appui en emprisonnant le support entre eux, l'élément d'appui présentant à cet effet dans une première direction une largeur totale supérieure à la largeur minimale dudit intervalle.

Un tel dispositif est décrit dans FR-A-2 732 419. Dans ce dispositif connu, l'élément d'appui a la forme générale d'un cylindre de révolution dont la surface cylindrique définit les zones d'appui. Le diamètre du cylindre est donc supérieur à la largeur minimale de l'intervalle entre barreaux. La longueur du cylindre étant également supérieure à cette largeur minimale, l'élément d'appui ne peut être engagé dans l'intervalle à travers la première face du support.

Lorsque le support est un caillebotis servant de plancher dans un bâtiment occupé par des animaux d'élevage, et que ce caillebotis ne peut être soulevé, il est nécessaire, pour mettre en place l'élément d'appui, d'accéder dans la fosse située au-dessous du caillebotis, ce qui est pour le moins désagréable du fait de la présence des déchets accumulés au fond de cette fosse, résultant des diverses activités des animaux.

Le but de l'invention est de remédier à cet inconvénient. Un autre but de l'invention est de permettre l'adaptation du dispositif d'ancrage également à un autre type de support que celui évoqué ci-dessus.

Selon un premier aspect, l'invention vise notamment un dispositif du genre défini en introduction, et prévoit qu'il comprend en outre un outil de mise en place propre à s'étendre en profondeur dans l'intervalle à partir de la première face, et que l'élément d'appui présente dans une seconde direction une épaisseur totale inférieure à ladite largeur minimale et est propre à se monter de manière amovible sur l'outil et à se déplacer par rapport à celui-ci entre une position d'introduction où ladite seconde direction coïncide avec la direction de la largeur des intervalles et des barreaux et une position d'appui où ladite première direction coïncide avec la direction de ladite largeur, lesdites zones d'appui étant tournées vers lesdites portions de parois inclinées.

Des caractéristiques optionnelles de l'invention, complémentaires ou alternatives, sont énoncées ci-après:
- L'élément d'appui est propre à pivoter par rapport à l'outil autour d'un axe perpendiculaire aux première et seconde directions.
- L'outil comporte une broche s'ajustant dans un alésage de l'élément d'appui.
- L'outil comprend un fil coudé sensiblement à angle droit de manière à former ladite broche et une tige de manoeuvre allongée propres à s'étendre respectivement dans la direction longitudinale des barreaux et perpendiculairement à la première face.
- La seconde direction est perpendiculaire à la première face lorsque l'élément d'appui est dans sa position d'appui.
- L'élément d'appui présente au moins une portion de surface cylindrique arrondie convexe lui permettant de venir en contact avec chacune des portions de parois inclinées d'un intervalle par des génératrices respectives de ladite portion de surface cylindrique.
- L'élément d'appui présente la forme générale d'une portion de cylindre de révolution limitée par au moins un premier plan parallèle à l'axe du cylindre et à la première direction et perpendiculaire à la seconde direction.
- Ladite portion de cylindre est limitée en outre par un second plan parallèle au premier plan et plus éloigné que celui-ci de l'axe du cylindre.
- Les moyens de serrage comprennent une tige filetée propre à se loger en partie dans l'intervalle et à traverser le plan de la première face, coopérant avec un écrou solidaire de l'élément d'appui pour appliquer par vissage ce dernier sur lesdites portions de parois inclinées.

Selon un second aspect, l'invention vise un dispositif du genre défini en introduction, dans lequel l'élément d'appui présente au moins deux gorges de largeur uniforme, allongées dans la première direction et s'ouvrant sur toute leur longueur en direction de la première face lorsque l'élément d'appui est dans sa position d'appui, encadrant les moyens de serrage.

Les caractéristiques et avantages de l'invention seront exposés plus en détail dans la description ci-après, en se référant aux dessins annexés, sur lesquels:
- la figure 1 est une vue en perspective montrant côte à côte l'élément d'appui et l'outil de mise en place d'un dispositif selon l'invention;
- les figures 2 à 5 sont des vues en perspective illustrant les phases successives de la mise en place du dispositif sur un caillebotis; et
- la figure 6 est une vue en perspective illustrant l'utilisation du dispositif en liaison avec un autre type de caillebotis.

Aux figures 2 à 5, la référence 1 désigne un caillebotis connu en béton formant, en juxtaposition avec d'autres caillebotis, le plancher d'un bâtiment destiné à recevoir des animaux d'élevage. Les références 2-1 et 2-2 désignent deux barreaux voisins appartenant à une série de barreaux parallèles constitutifs du caillebotis, les barreaux étant reliés deux à deux par des entretoises 3 formant des ponts localisés. Tous les barreaux présentent des faces supérieures situées dans un même plan horizontal et définissant la face supérieure 4 du caillebotis.

Les barreaux 2-1 et 2-2 sont séparés par un intervalle 5 dont les flancs sont symétriques l'un de l'autre par rapport à un plan vertical. Chacun de ces flancs comprend une portion de surface supérieure 6, adjacente à la face supérieure 4, définie par une face verticale du barreau correspondant, et une portion de surface inférieure 7, s'étendant sur la majeure partie de l'épaisseur du caillebotis à partir de sa face inférieure, définie par une face inclinée du barreau. Les deux portions de surface 7 vont en s'éloignant l'une de l'autre du haut vers le bas. En d'autres termes, l'intervalle 5 va en s'évasant vers le bas sur la majeure partie de sa hauteur.

Le dispositif de fixation selon l'invention comprend une pièce d'appui 10 en polyamide. Cette pièce a la forme générale d'une portion de cylindre de révolution limitée par deux plans parallèles à l'axe du cylindre et parallèles entre eux, définissant deux faces opposées de la pièce, à savoir une face 13 contenant l'axe du cylindre ou proche de celui-ci, et une face 14 proche d'un plan tangent à la surface cylindrique. La pièce 10 est traversée par un trou 12 dont l'axe est perpendiculaire aux faces 13 et 14 et passe par les centres de celles-ci. Le trou 12 est élargi, au voisinage de la face 13, pour loger un écrou métallique non représenté qui peut être emprisonné par surmoulage de la matière de la pièce ou emmanché dans le trou.

Le dispositif comprend également une vis 15 dont la tige peut s'enfiler dans le trou 12 et se visser dans l'écrou.

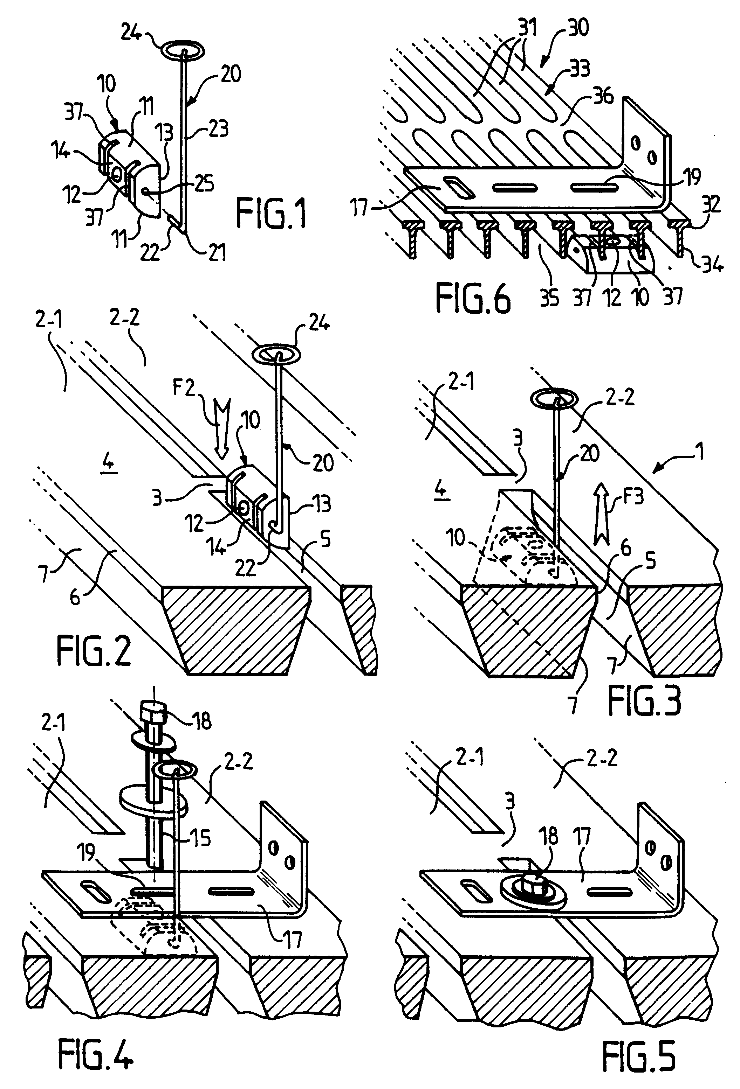

Dans la position illustrée à la figure 5, la tige de la vis et la pièce 10 sont logées dans l'intervalle 5. La tige traverse la branche horizontale 17 d'une équerre, qui repose sur la face supérieure 4 du caillebotis. La tête 18 de la vis s'appuie sur la branche 17 par l'intermédiaire de rondelles. Le vissage de la vis dans l'écrou assure un serrage du caillebotis et de la branche 17 entre la pièce 10 et la tête 18, les portions résiduelles 11 de la surface cylindrique de la pièce 10 s'appuyant sur les portions de parois inclinées 7 de l'intervalle 5 et subissant une légère déformation élastique pour s'adapter aux irrégularités de celles-ci. L'équerre sert de façon connue à maintenir une cloison verticale délimitant différents espaces au-dessus du caillebotis.

L'outil de mise en place 20 est formé d'un fil métallique rigide coudé à angle droit en 21 pour former une broche courte 22 et une tige de manoeuvre longue 23, cette dernière se raccordant, à l'opposé de la broche 2, à une poignée 24 formée également par pliage et cintrage du fil. Le contour de la poignée 24 est un cercle dont le diamètre est supérieur à la largeur minimale de l'intervalle 5, de sorte que l'outil ne peut tomber à travers le caillebotis. La broche 22 peut pénétrer à frottement doux dans un alésage 25 s'étendant parallèlement à l'axe du cylindre de base de la pièce 10 à partir d'une face d'extrémité de celle-ci.

La figure 2 montre la pièce 10 montée sur la broche 22 de la pièce 20 et orientée de telle manière que la tige 20 s'étende parallèlement aux faces 13 et 14. L'épaisseur de la pièce 10, définie par la distance entre les faces 13 et 14, étant inférieure à la largeur minimale de l'intervalle 5, qui correspond à la distance entre les portions de surface verticales 6, on peut introduire la pièce 10 dans l'intervalle de haut en bas, comme indiqué par la flèche F2, en tenant la poignée 24 de l'outil. Lorsque la pièce 10 a franchi la hauteur des portions de surface 6, on la décale latéralement pour l'amener en appui sur celle des portions de surface inclinées 7 vers laquelle est tournée la face 13, et on tire l'outil vers le haut, comme indiqué par la flèche F3 de la figure 3, pour faire pivoter la pièce 10 jusqu'à ce que la face 14 soit orientée horizontalement et tournée vers le haut. La pièce 10 se centre ensuite automatiquement par rapport à la largeur de l'intervalle 5. Il est alors possible d'aligner, comme montré sur la figure 4, le trou 12, une ouverture 19 de la branche 17 de l'équerre et la tige de la vis 15, puis d'engager la tige de la vis dans le trou 12, à travers l'ouverture 19, pour la visser dans l'écrou et arriver à la position d'ancrage montrée à la figure 5. Dès que la pièce 10 est retenue par la coopération de la vis et de l'écrou, l'outil 20 peut être retiré. Il peut de nouveau être utilisé pour extraire la pièce 10 lors d'un démontage éventuel de l'équerre.

La figure 6 montre un caillebotis 30 différent du caillebotis 1 des figures 2 à 5, dont les barreaux 31 présentent un profil en T, chaque barreau comportant ainsi une semelle horizontale 32 définissant la face supérieure 33 plane et horizontale du caillebotis, et une ailette 34 tournée vers le bas à partir de la semelle, ses faces latérales planes se rapprochant légèrement l'une de l'autre. Les intervalles 35 entre les barreaux 31 sont ici encore interrompus par des entretoises 36.

Pour coopérer avec le caillebotis 30, la pièce d'appui 10 présente deux gorges 37 ménagées à partir de la face 14, allongées parallèlement aux faces d'extrémité de la pièce et dont les extrémités débouchent dans les faces convexes 11.

Ces gorges, disposées symétriquement l'une de l'autre par rapport à l'axe du trou 12 de part et d'autre de ce trou, ont une largeur et un écartement mutuel correspondant à la largeur et à l'écartement mutuel des ailettes 34 du caillebotis, de sorte que deux ailettes voisines peuvent s'engager avec serrage dans les deux gorges respectivement, jusqu'au fond de celles-ci pour immobiliser la pièce, la face 14 étant alors disposée horizontalement et tournée vers le haut, comme montré sur la figure. La vis 15 du dispositif d'ancrage, non représentée sur la figure 6, peut ainsi être engagée à travers la branche 17 dans l'intervalle 35 entre les deux ailettes et dans le trou 12 pour se visser dans l'écrou, de la manière décrite précédemment en relation avec les figures 4 et 5. L'outil 20 n'est pas utilisé dans ce cas, et il suffit pour mettre en place la pièce 10 de soulever momentanément le caillebotis, qui est réalisé en matière plastique et de faible poids.

Bien entendu, trois gorges ou plus, mutuellement équidistantes, peuvent être prévues si la longueur de la pièce d'appui est supérieure au double du pas des barreaux du caillebotis.

Par ailleurs, ces gorges peuvent être prévues dans la pièce d'appui d'un dispositif d'ancrage ne comprenant pas d'outil de mise en place.

## Revendications

1. Dispositif pour fixer un objet (17) sur une première face sensiblement plane (4) d'un support (1) comportant des barreaux - ou des nervures - parallèles (2-1, 2-2) séparés les uns des autres par des intervalles (5), chaque intervalle étant délimité par deux portions de parois (7) définies respectivement par deux barreaux voisins et inclinées par rapport au plan de la première face, sur une fraction au moins de l'épaisseur des barreaux, de façon à s'éloigner l'une de l'autre à partir de cette même face, le dispositif comprenant un élément d'appui (10) propre à s'appuyer par des zones d'appui respectives (11) sur lesdites portions de parois inclinées et des moyens de serrage (15) propres à solliciter l'un vers l'autre ledit objet et ledit élément d'appui en emprisonnant le support entre eux, l'élément d'appui présentant à cet effet dans une première direction une largeur totale supérieure à la largeur minimale dudit intervalle, caractérisé en ce qu'il comprend en outre un outil de mise en place (20) propre à s'étendre en profondeur dans l'intervalle à partir de la première face et en ce que l'élément d'appui présente dans une seconde direction une épaisseur totale inférieure à ladite largeur minimale et est propre à se monter de manière amovible sur l'outil et à se déplacer par rapport à celui-ci entre une position d'introduction où ladite seconde direction coïncide avec la direction de la largeur des intervalles et des barreaux et une position d'appui où ladite première direction coïncide avec la direction de ladite largeur, lesdites zones d'appui étant tournées vers lesdites portions de parois inclinées.

2. Dispositif selon la revendication 1, dans lequel l'élément d'appui est propre à pivoter par rapport à l'outil autour d'un axe perpendiculaire aux première et seconde directions.

3. Dispositif selon la revendication 2, dans lequel l'outil comporte une broche (22) s'ajustant dans un alésage de l'élément d'appui.

4. Dispositif selon la revendication 3, dans lequel l'outil comprend un fil coudé sensiblement à angle droit de manière à former ladite broche (22) et une tige de manoeuvre allongée (23) propres à s'étendre respectivement dans la direction longitudinale des barreaux et perpendiculairement à la première face.

5. Dispositif selon la revendication 4, dans lequel la tige de manoeuvre se raccorde, à l'opposé de la broche, à une poignée (24) dont l'encombrement est supérieur à ladite largeur minimale dans toutes les directions perpendiculaires à la direction longitudinale de la tige.

6. Dispositif selon l'une des revendications précédentes, dans lequel la seconde direction est perpendiculaire à la première face lorsque l'élément d'appui est dans sa position d'appui.

7. Dispositif selon l'une des revendications précédentes, dans lequel l'élément d'appui présente au moins une portion de surface cylindrique arrondie convexe (11) lui permettant de venir en contact avec chacune des portions de parois inclinées d'un intervalle par des génératrices respectives de ladite portion de surface cylindrique.

8. Dispositif selon la revendication 7, dans lequel l'élément d'appui présente la forme générale d'une portion de cylindre de révolution limitée par au moins un premier plan (13) parallèle à l'axe du cylindre et à la première direction et perpendiculaire à la seconde direction.

9. Dispositif selon la revendication 8, dans lequel ladite portion de cylindre est limitée en outre par un second plan (14) parallèle au premier plan et plus éloigné que celui-ci de l'axe du cylindre.

10. Dispositif selon l'une des revendications précédentes, dans lequel les moyens de serrage comprennent une tige filetée (15) propre à se loger en partie dans l'intervalle et à traverser le plan de la première face, coopérant avec un écrou solidaire de l'élément d'appui pour appliquer par vissage ce dernier sur lesdites portions de parois inclinées.

11. Dispositif selon l'une des revendications précédentes, dans lequel l'élément d'appui présente au moins deux gorges (37) de largeur uniforme, allongées dans la première direction et s'ouvrant sur toute leur longueur en direction de la première face lorsque l'élément d'appui est dans sa position d'appui, encadrant les moyens de serrage.
